# DEMANDE DE BREVET EUROPEEN

(11) **EP 1 921 819 A1**
(43) Date de publication de la demande: **14.05.2008**
(21) Numéro de dépôt: 07116081.6
(22) Date de dépôt: 11.09.2007
(51) Int. Cl.: H04L 29/06

(54) **Marqueur pour systèmes de communication composés d'une pluralité de serveurs SIP**

(30) Priorité: 02.10.2006 FR 0654035
(71) Demandeur: Alcatel Lucent, 75008 Paris (FR)
(72) Inventeur: Tombroff, Dimitri, 91300 Massy (FR); Lebel, Christophe, 44115 Haute Goulaine (FR)
(74) Mandataire: Chaffraix, Sylvain

(57) **Abrégé**

Système de communication (S) apte à échanger des messages de signalisation SIP, avec un réseau de communication (N), comportant une pluralité de serveurs (S₁, S₂, S₃... Sₙ) pour traiter les messages entrants (mₛ) et générer des messages sortants et un équipement de répartition de charge (LB) pour acheminer un message entrant vers un serveur particulier en fonction de règles de répartition de charge (R, R_{aff}). Les serveurs disposent des moyens pour inclure dans les messages sortants un marqueur représentatif au moins de lui-même, et les règles de répartition de charge de l'équipement de répartition de charge contiennent des règles (R) pour, lorsqu'un marqueur est inclus dans un message entrant, l'acheminer vers le serveur correspondant au marqueur.

## Description

La présente invention est relative aux réseaux de communication. Plus précisément, elle concerne un système de communication apte à échanger des messages de signalisation, notamment conformes au protocole SIP, avec un réseau de communication.

Le protocole SIP est communément utilisé pour permettre à deux parties (typiquement, deux terminaux) d'établir une connexion à travers un réseau de communication. Ce protocole est défini par le RFC 3261 de l'IETF (Internet Engineering Task Force) intitulé « SIP: Session Initiation Protocol » mais fait également l'objet d'extensions, elles aussi définies par des RFC de l'IETF.

Le protocole SIP définit deux types de système de communication : des terminaux (ou « agents » selon la terminologie propre au protocole SIP) et des éléments de signalisation dits « Proxy ». Le rôle des « proxies » est de faciliter la mise en relation entre les terminaux. En effet, un terminal est connu au sein d'un réseau de communication par une adresse physique, alors que les utilisateurs des terminaux sont identifiés par des adresses logiques. Lorsqu'un utilisateur souhaite joindre un correspond, il ne dispose généralement que de son adresse logique. Le but des éléments de signalisation est en autres d'effectuer cette mise en correspondance entre l'adresse logique du correspondant et l'adresse physique de son terminal.

Le terminal requérant l'établissement d'une communication est appelé « client » ou UAC (« *User Agent Client* »). Le terminal appelé est appelé « serveur » (UAS pour « *User Agent Server* »).

Avec l'émergence des architectures dites IMS (pour « *IP Multimedia Subsystem »* en langue anglaise), normalisées à la fois par le 3GPP et par le TiSpan, le protocole SIP prend davantage d'importance encore et les éléments de signalisation ont de plus en plus de messages de signalisation à traiter.

Il devient donc nécessaire des proposer des solutions permettant aux différents types éléments de signalisation de traiter ce volume grossissant de messages. Il a donc été prévu de prévoir plusieurs équipements pour implémenter un élément de signalisation.

De telles architectures sont utilisées dans d'autres contextes. On peut par exemple citer l'article « Introduction to Server Clustering », publié sur le site internet de la société Cisco, qui présente les avantages de ces groupes (ou *« clusters* ») d'équipements.

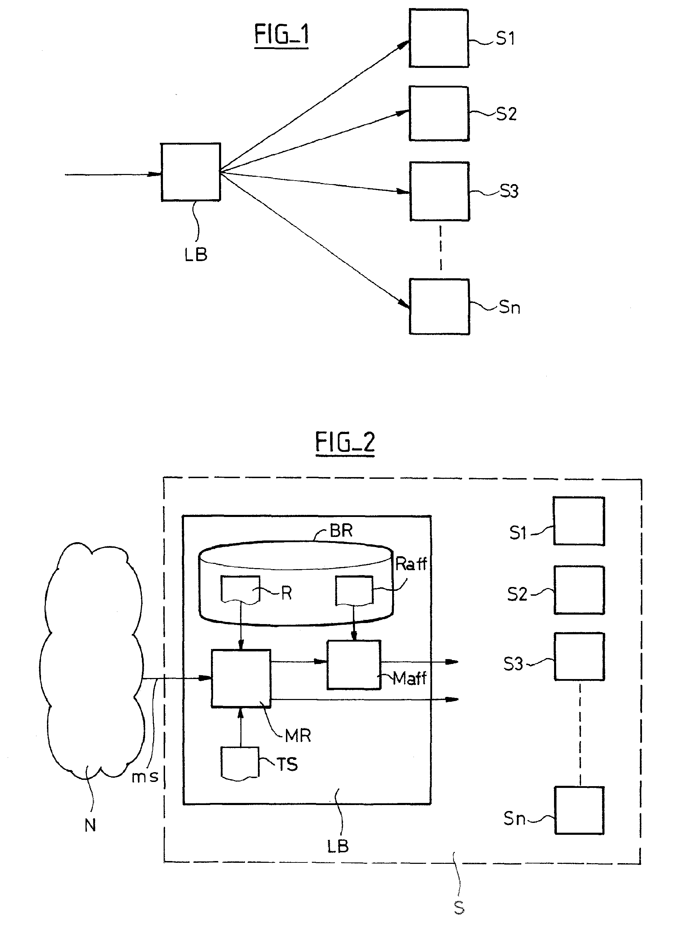

La figure 1 illustre de façon simplifiée une architecture de ce type.

Elle se base sur un équipement particulier LB qui répartit la charge parmi une pluralité d'équipements de traitement, ou serveurs, S1, S2, S3... Sn. Lorsqu'une requête de service SR parvient au groupe d'équipements, l'équipement de répartition de charge LB l'achemine vers un serveur particulier, ici S3, en fonction de règles de répartition de charge.

Toutefois, l'application de cette architecture pour des éléments de signalisation (ou des terminaux) SIP pose des problèmes du fait des spécificités du fonctionnement d'une session de communication et du protocole SIP.

Notamment, les solutions actuelles basées sur des groupes d'équipements prennent en compte de façon sous-optimale le fait que la gestion d'un appel nécessite l'établissement d'un contexte. En effet, lorsqu'un deuxième message de signalisation parvient à l'équipement de signalisation, il lui est nécessaire de récupérer ce contexte afin de pouvoir le traiter.

Or dans ces solutions, il n'y a aucun mécanisme permettant de disposer de ce contexte : si le premier message a été traité par un équipement (par exemple S3), le contexte relatif à ce traitement et à l'appel ou session correspondant à ce message est contenu dans ce serveur S3.

Lorsqu'un second message de signalisation parvient à l'équipement de répartition de charge LB, deux ensembles de solutions sont possibles.

Selon un premier ensemble de solutions, l'équipement de répartition de charges se comporte comme dans les solutions générales décrites plus haut (par exemple l'article de Cisco). Un message de signalisation subséquent parvient donc à un serveur différent de celui ayant traité le message précédent. Il est alors mis en oeuvre un mécanisme pour transmettre le contexte mémorisé dans le premier serveur vers le second serveur.

Cette approche pose le problème de devoir transférer, de façon récurrente, le contexte d'un serveur à un autre. Ce mécanisme est également très coûteux et ne permet pas un déploiement efficace lorsque le site reçoit un grand nombre de messages de signalisation et à un rythme rapide.

Selon un second ensemble de solutions, l'équipement de répartition de charges mémorise des associations entre un identifiant de la session de communication et le serveur en charge de cette session. Cette association est créée lors de la réception du premier message de signalisation correspondant à cette session, et utilisée pour acheminer les messages suivants vers le même serveur. Cet identifiant est typiquement formé des entêtes « Call-Id », « From » et « To » des messages de signalisation SIP.

Les associations sont typiquement stockées dans une base de données mémoire de l'équipement de répartition de charge LB, afin de garantir un accès suffisamment rapide.

Ces solutions présentent toutefois encore au moins quatre désavantages.

Premièrement, l'équipement de répartition de charge LB ne peut pas connaître la durée de la session de communication. Il est donc dès lors difficile d'implémenter une stratégie d'expiration des associations mémorisées. Si le délai d'expiration est trop court, l'association sera supprimée de la base de données alors que des messages de signalisation relative à cette session continuent d'arriver. Si le délai est trop long, il peut en résulter un engorgement de la base de données.

Deuxièmement, il est difficile de déployer cette solution pour qu'elle soit tolérante aux fautes de l'équipement de répartition de charge, sans trop pénaliser ses performances.

En effet, si l'équipement de répartition de charge subit une panne, les informations relatives aux associations contenues dans sa base de données sont perdues. Même lorsque l'équipement de répartition de charge redevient opérationnel, il ne lui est pas possible d'acheminer les messages de signalisation vers les bons serveurs. Il peut alors en résulter des interruptions des sessions de communication.

Pour pallier ce problème, il est possible de mémoriser les associations sur une base déportée, ou bien de mettre en place des mécanismes pour que les serveurs redirigent les messages de signalisation mal-aiguillés vers le bon serveur. Mais il s'agit-là de mécanisme coûteux à mettre en oeuvre, en terme de performances.

Troisièmement, certaines applications SIP combinent plusieurs sessions de communication identifiées chacune par un « Call Id » différent.

C'est par exemple le cas d'un élément de signalisation dit « B2BUA » (« *back-to-back User Agent* »). Un tel élément joue le rôle d'un serveur SIP vis à vis de l'appelant et d'un client vis-à-vis de l'appelé. La communication de bout en bout est formée de deux sessions distinctes : une première entre l'appelant et l'élément de signalisation (considéré alors comme un serveur SIP) et une seconde entre l'élément de signalisation (considéré alors comme un client SIP) et l'appelé.

Il convient alors que les différentes sessions soient traitées par un même serveur. L'équipement de répartition de charge doit donc maintenir une double association entre les deux sessions et le serveur les traitant. Mais, notamment en cas de panne d'un serveur, il est très complexe de faire en sorte que l'équipement de répartition de charges aient les informations nécessaires pour acheminer les messages de signalisation vers le serveur approprié. Ainsi, il peut arriver que les deux sessions soient re-crées sur deux serveurs différents, et il faut qu'un serveur redirige les messages de signalisation reçus vers le bon serveur.

Quatrièmement, il existe différentes applications basées sur le protocole SIP dans lesquelles une même session « applicative » peut nécessiter plusieurs sessions « protocolaires » : Une répartition de charge basée sur un identifiant de session comme l'entête « Call-id » ne peut donc pas garantir que tous les messages d'une même session « applicative » soient traités par un même serveuer. Ce type d'applications est dit « multi-appel » ou « *multi-call* », en langue anglaise.

C'est par exemple le cas des éléments appelés S-CSCF (« *Serving - Call Session Control Function* ») au sein d'une architecture IMS.

Un S-CSCF reçoit des messages de signalisation d'enregistrement de terminaux (messages « Register ») puis des messages de signalisation d'invitation d'appel (messages « Invite ») ou autres (messages « Publish »...). Le premier message d'enregistrement permet au terminal d'être authentifié par le réseau de communication IMS, et d'être ainsi admis à émettre des appels à travers ce réseau. Ces différents messages ne possèdent pas les mêmes identifiants de session « Call id », et forment en fait des « sessions protocolaires » différentes.

Aussi, l'équipement de répartition de charge du S-CSCF ne peut pas acheminer les messages de signalisation appartenant à un même terminal (et qui font parties d'une même « session applicative ») vers le même serveur. Afin de déterminer si un message de signalisation suivant (« Invite », « Publish »...) correspond à un terminal ayant été précédemment authentifié par un serveur du S-CSCF, ce-dernier doit être prévu pour que les contextes puissent être transmis d'un serveur à un autre. Cet impératif ajoute bien évidemment un surcoût au temps de traitement des messages de signalisation et diminue d'autant les performances générales du système IMS.

Un second exemple a trait à la présence et à la gestion des messages de signalisation « Publish » qui permet à un client de mettre à jour ses informations de présence. Ce type de message de signalisation est décrit dans le RFC 3903 de l'IETF, intitulé « Session Initiation Protocol (SIP) Extension for Event State Publication » et publié en octobre 2004.

Un même client peut être amené à transmettre plusieurs messages « Publish », en fonction de l'activité de l'utilisateur. Chacun de ses messages « Publish » comporte un identifiant de session « Call-id » différent, et forme donc autant de « sessions protocolaires » (Du point de vue du protocole SIP, il s'agit de sessions différentes). Pourtant toutes ses sessions appartiennent à une même session applicative. Idéalement, elles devraient donc être traitées par le même serveur afin que celui-ci possède l'ensemble du contexte lié à cette session applicative.

Différentes solutions ont été proposées, basées sur l'utilisation d'un marqueur.

Par exemple, les demandes de brevets américains US2004/103194, US2004/153497 et européenne EP1599015 proposent qu'un identifiant du serveur attribué à une session soit envoyé au client. Le client transmet alors les messages subséquents directement au serveur, sans passer par l'équipement de répartition de charge. Celui-ci ne remplie alors plus le rôle d'acheminer les messages de signalisation.

Ces solutions souffrent de ne pas être tolérantes aux fautes : aucun mécanisme de reprise n'est proposé en cas de dysfonctionnement du serveur attribué.

La demande de brevet américain US2004/152469 propose également l'insertion d'un marqueur au sein des messages de signalisation qui permettent de déterminer si un message entrant est un premier message et si non de déterminer un identifiant de session et d'acheminer le message vers le serveur associé à cet identifiant de session.

Cette solution présente toutefois les mêmes premier et deuxième désavantages présentés plus haut : il est nécessaire que l'équipement de répartition de charge maintienne des contextes de session et notamment une base associant les sessions ouvertes et les serveurs attribués. L'équipement de répartition de charge est dit « *stateful* ».

Il est donc nécessaire de proposer une architecture d'un système de communication ne présentant pas ces inconvénients. L'invention a pour objet une telle architecture.

Plus précisément, l'invention a pour premier objet un système de communication apte à échanger des messages de signalisation, notamment conformes au protocole SIP, avec un réseau de communication. Le système de communication comporte une pluralité de serveurs pour traiter les messages de signalisation entrants et générer des messages de signalisations sortants et un équipement de répartition de charge pour acheminer un message de signalisation entrant vers un serveur particulier en fonction de règles de répartition de charge.

Le système de communication selon l'invention se caractérise en ce que
- les serveurs disposent des moyens pour inclure dans les messages de signalisation sortants un marqueur représentatif au moins de lui-même, et en ce que
- les règles de répartition de charge de l'équipement de répartition de charge contiennent des règles pour, lorsqu'un marqueur est inclus dans un message de signalisation entrant, acheminer le message de signalisation entrant vers le serveur correspondant à ce marqueur.

Le système de communication selon l'invention peut avoir plusieurs fonctions : terminal (ou agent) client UAC, terminal serveur UAS, élément de signalisation (« *proxy* »)... ou bien sûr une combinaison de ces fonctions. Il peut également s'agir d'un élément de signalisation de type «B2BUA» (« back-to-back *User Agent* »).

Ainsi, par l'utilisation d'un marqueur identifiant un serveur au sein du système de communication, les applications peuvent s'assurer que l'ensemble des messages de signalisation sera acheminé vers ce serveur.

Il n'est plus nécessaire pour l'équipement de répartition de charge de maintenir une base de données des associations entre « Call Id » et serveur, puisque l'acheminement est basé sur un marqueur. Il lui suffit d'une table d'association, de taille réduite, mettant en correspondance les valeurs du marqueur et les adresses des serveurs.

Il est à noter toutefois qu'il peut être utile de conserver une table de correspondance entre identifiants de session (« call Id ») et serveur pour gérer les ré-émissions. En effet, le protocole SIP prévoit qu'un client doit re-émettre sa requête tant qu'il n'a pas reçu de réponse de la part du serveur. Dans le cas des messages initiaux, pour lequel un contexte et donc un marqueur n'ont pas encore été déterminés, il est important que les messages répétés soient dirigés vers le même serveur. Une table de correspondance entre « call Id » et serveur semblable à celles de l'état de la technique peut donc être mise en oeuvre, mais le délai imparti pour les ré-émissions est limités par le protocole SIP, de sorte que les associations peuvent expirer au bout d'un temps connu et relativement court.

La table d'association demeure donc à une taille raisonnable n'engendrant pas les problèmes cités précédemment.

Notamment, la problématique, mentionnée précédemment, de la détermination d'une bonne valeur d'expiration des associations ne se pose donc plus. De même, une panne de l'équipement de répartition de charge ne pose plus de véritable problème puisque celui-ci ne contient plus d'informations dynamiques sur l'état du système (il est dit « State-less », en langue anglaise).

Lorsqu'une même communication engendre plusieurs identifiants de session, comme dans le cas de l'élément de signalisation « back-to-back » mentionné plus haut, l'application peut naturellement faire en sorte que ces sessions soient toutes traitées par le même serveur, en utilisant une même valeur de marqueur.

Il en va de même pour le cas du S-CSCF : l'emploi d'un même marqueur pour les messages « Register » et « Invite » assure le traitement par un même serveur, sans qu'il soit nécessaire de procéder à des transferts de contexte d'un serveur à l'autre.

Le système de communication selon l'invention permet donc de résoudre de façon élégante l'ensemble des problèmes soulevés par les solutions de l'état de la technique.

Selon une mise en oeuvre de l'invention, les marqueurs contiennent au moins une première partie représentative du système de communication et l'identifiant de façon univoque au sein du réseau de communication.

Les marqueurs peuvent en outre contenir une seconde partie représentative des serveurs et les identifiant de façon univoque au sein du système de communication.

Cette deuxième partie peut être constituée d'un identifiant abstrait basé sur l'adresse physique d'un des serveurs. Dans cette hypothèse, l'équipement de répartition de charge possède une table des serveurs mettant en correspondant cet identifiant abstrait et l'adresse physique.

Les marqueurs contiennent en outre une troisième partie représentative du contexte associé aux messages de signalisation.

Par ailleurs, les serveurs peuvent inclure les marqueurs dans un emplacement standardisé et unique des messages de signalisation. Alternativement, ils peuvent inclure ces marqueurs dans un emplacement dépendant de la fonction du système de communication.

Les règles de répartition de charge de l'équipement de répartition de charge peuvent contenir des règles pour, lorsque aucun marqueur n'est inclus dans un message de signalisation entrant, affecter un serveur à ce message de signalisation entrant.

L'invention a pour deuxième objet un élément intermédiaire de signalisation (ou « proxy ») comportant un système de communication selon le premier objet de l'invention. Les marqueurs peuvent, dans cette situation, être inclus dans les entêtes « Via » et/ou « Record route ».

L'invention a pour troisième objet un élément de signalisation de type B2BUA comportant un système de communication selon le premier objet de l'invention, dans lequel les marqueurs sont inclus à la fois dans l'entête « From » et dans l'entête « To » avec une valeur identique.

Un quatrième objet de l'invention est un terminal de communication comportant un système de communication selon le premier objet de l'invention. Les marqueurs peuvent dans ce cas être inclus dans le champ « From » lorsque le terminal a un rôle de client, et dans le champ « To » lorsqu'il a un rôle de serveur.

L'invention a pour cinquième objet un réseau de communication comportant au moins un élément de signalisation conforme au deuxième objet de l'invention et des moyens permettant de transmettre des messages de signalisation entre des terminaux de communication et le ou les éléments de signalisation. Les terminaux de communication peuvent optionnellement être conformes au quatrième objet de l'invention.

Un sixième objet de l'invention concerne un procédé de transmission de messages de signalisation entre un terminal de communication appelant et un terminal de communication serveur, mettant en oeuvre un élément de signalisation selon le deuxième objet de l'invention.

L'invention, dans ses différents objets, apparaîtra de façon plus claire dans la description qui va suivre, en liaison avec les figures annexées.
La figure 1, précédemment commentée, représente de façon simplifiée une architecture de groupe d'équipements (ou « *cluster* ».)
La figure 2 illustre de façon schématique une architecture fonctionnelle possible d'un système de communication selon une mise en oeuvre de l'invention.

Le système de communication selon l'invention peut être un élément de signalisation, notamment un CSCF (« *Call Session Control Function* ») d'une architecture IMS, mais également un terminal de communication client (UAC pour « *User Agent Client* » ou serveur (UAS pour « *User Agent Server* »).

Un tel système de communication est schématisé par la figure 2.

Le système de communication S est prévu pour échanger des messages de signalisation mₛ avec le réseau de communication N. Les messages de signalisation sont typiquement conformes au protocole SIP défini par l'IETF.

Les messages de signalisation m, aboutissent à un équipement de répartition de charge LB, dont le but est d'acheminer ces messages de signalisation vers le « bon » serveur S₁ S₂, S₃... Sₙ.

La figure 2 schématise une architecture fonctionnelle possible pour l'équipement de répartition de charge LB, mais il est important de noter qu'il s'agit là d'une architecture fonctionnelle susceptible de diverses implémentations physiques. Elle est fournie principalement dans un but explicatif permettant de rendre l'invention plus claire.

Selon cette mise en oeuvre, l'équipement de répartition de charge LB possède un module d'acheminement ou de routage MR qui, en coopération avec une base de règles BR, permet d'acheminer les messages de signalisation entrants mₛ vers un serveur particulier parmi la pluralité de serveurs S₁, S₂, S₃ ... Sₙ que possède le système de communication S.

À la réception d'un message de signalisation mₛ, le module de routage MR vérifie la présence d'un marqueur dans le message.

Certaines règles R contenues dans la base BR précisent qu'en présence d'un marqueur, le message de signalisation mₛ doit être acheminé vers le serveur correspondant à ce marqueur.

Le marqueur identifie un serveur particulier du système de communication S. Il peut s'agir de l'adresse physique de ce serveur ou bien d'un identifiant que le module de routage MR peut mettre en correspondance avec l'adresse physique au moyen d'une table des serveurs TS.

Une fois cette adresse physique déterminée, le module de routage MR peut acheminer vers le serveur correspondant.

Selon l'invention, tous les messages de signalisation correspondant à une même communication comportent un même marqueur et par conséquent entraînent la détermination d'une même adresse physique. Ils sont donc tous acheminés vers un même serveur et associés à un même contexte.

Ce contexte représente l'ensemble des informations utilisées pour traiter un message de signalisation. Il dépend donc des messages de signalisation déjà reçus. Il peut aussi contenir des informations récupérées sur une base externe (serveur de présence, serveur applicatif, etc.)

Autrement dit, la présence d'un marqueur indique qu'un contexte existe déjà dans le système de communication pour la communication à laquelle correspond le message de signalisation mₛ entrant. En utilisant le marqueur pour l'acheminer, il est garanti que ce sera le serveur possédant ce contexte qui le traite.

Dans le cas où un message de signalisation mₛ ne comporte pas de marqueur, cela signifie qu'aucun contexte n'existe pour la communication correspondant à ce message entrant. Il s'agit d'un premier message de signalisation pour une communication donnée.

L'équipement de répartition de charges LB possède un module d'affectation M_{aff} ayant pour but d'affecter le contexte à un serveur. Il dispose pour cela de règles d'affectation R_{aff} qui peuvent être similaires à celles existantes dans les solutions de l'état de la technique.

Ces règles d'affectation peuvent simplement consister à affecter tour à tour chaque nouveau contexte au serveur d'incrément suivant : ainsi, par exemple, le premier contexte est affecté au serveur S₁, le second au serveur S₂ et ainsi de suite.

D'autres mécanismes plus complexes peuvent être mis en oeuvre, basés notamment sur la charge réelle des serveurs afin d'affecter un nouveau contexte au serveur le moins chargé.

Lorsque l'affectation est déterminée par le module d'affectation M_{aff}, le message de signalisation mₛ est acheminé au serveur correspondant.

Il est à noter que l'équipement de répartition de charge LB ne mémorise pas cette affectation, ni n'introduit d'information supplémentaire dans le message de signalisation mₛ transmis au serveur.

Les serveurs disposent de moyens pour inclure dans les messages de signalisation sortants un marqueur représentatif de lui-même, c'est-à-dire permettant à l'équipement de répartition de charge de l'identifier parmi la pluralité de serveurs S₁, S₂, S₃... Sₙ contenus dans le système de communication S.

De cette façon l'autre partie recevant le message de signalisation sortant aura connaissance du marqueur. En utilisant ce marqueur dans les autres messages de signalisation destinés au système de communication S, elle aura l'assurance qu'ils seront traités par le même serveur.

Plus précisément, ce marqueur peut être composé de plusieurs parties.

Une première partie peut être représentative du système de communication S lui-même. Elle permet à l'équipement de répartition de charge LB recevant un message de signalisation de s'assurer qu'il en est le bon destinataire et que le marqueur est effectivement un marqueur le concernant.

Il doit donc s'agir d'une valeur identifiant de façon univoque le système de communication S au sein d'un réseau de communication. Dans le cas où ce système de communication S fait partie du réseau mondial, communément appelé Internet, la valeur donc être mondialement unique.

Cette première partie peut par exemple être l'adresse MAC de l'équipement de répartition de charge ou basé sur celle-ci. L'adresse MAC (pour «*Media Access Control* ») définit en effet de façon unique un équipement de réseau. Plusieurs types d'adresses MAC existent, notamment MAC-48, EUI-48 et EUI-64 définis par l'IEEE (*Institution of Electrical and Electronics Engineers*).

Cette première partie peut aussi être l'adresse IP du système de communication S, ou bien être basée sur elle.

Le marqueur peut contenir en outre une deuxième partie représentative du serveur. Son rôle est d'identifier le serveur de façon univoque au sein du système de communication S, afin que l'équipement de répartition de charge LB puisse acheminer le message de signalisation entrant vers un serveur clairement déterminé.

Cette deuxième partie peut être constituée de l'adresse physique du serveur (adresse MAC....) ou bien d'un identifiant plus abstrait basé sur celle-ci. Dans ce dernier cas, il est supposé que l'équipement de répartition de charge LB possède une table des serveurs TS mettant en correspondance cet identifiant abstrait et l'adresse physique du serveur. Cette deuxième partie permet ainsi à l'équipement de répartition de charge LB d'acheminer les messages entrants vers le « bon » serveur.

Cette deuxième partie peut également identifier un processus logiciel (ou « process » en langue anglaise). La correspondance entre le processus logiciel identifié et le serveur peut être effectuée de façon transparente par l'infrastructure logicielle (« *middleware* ») mise en oeuvre le système de communication S. Des infrastructures logicielles permettent en effet de masquer la localisation des processus logiciels au sein d'un système distribué, en se chargeant d'aiguiller les messages adressés à un processus donné vers l'équipement sur lequel il se trouve, de façon transparente pour les applications.

Enfin, le marqueur peut comporter une troisième partie contenant un identifiant de l'instance de l'application SIP, et représentative du contexte de la session. Cette troisième partie représentative du contexte de la session est utile pour localiser celui-ci lorsque le processus logiciel ou le serveur déterminé par la deuxième partie du marqueur est in-opérationnel.

Cette troisième partie n'est pas nécessaire lorsque le serveur est rendu tolérant aux fautes par une redondance N-N. Dans une telle situation, l'équipement de répartition de charge LB peut en effet maintenir une table associant à chaque serveur actif un serveur redondant. Lorsqu'un serveur actif devient in-opérationnel, il peut alors acheminer les messages qui lui sont adressés vers le serveur redondant qui possèdent également le contexte de l'application associée au message entrant.

Dans le cas d'une redondance N+1, les contextes contenus par un serveur sont dupliqués dans l'ensemble (ou un sous-ensemble) des autres serveurs. La connaissance du serveur vers lequel doit être acheminé un message ne suffit donc pas, à l'équipement de répartition de charge, pour déterminer comment acheminer ce message lors de la panne de ce serveur : il lui faut connaître le contexte.

En déterminant le contexte à partir de cette troisième partie et en utilisant une table de référence permettant d'associer un contexte à un serveur (ou à un processus logiciel), l'équipement de répartition de charge LB est à même d'acheminer le message de signalisation entrant vers le bon serveur au sein du système de communication S.

Le marqueur peut être inclus en différents emplacements des messages de signalisation.

Selon un premier mode de réalisation, le marqueur est inclus dans un emplacement standardisé et unique des messages de signalisation (entrants et sortants). Il pourrait s'agir d'un entête du protocole SIP spécifique, normalisé auprès de l'IETF. Toutefois, une telle implémentation nécessite de modifier le parc de terminaux de communication existant afin que ceux-ci soient conformes à cette nouvelle normalisation et soit à même d'interpréter les messages de signalisation reçus et d'en générer eux-mêmes.

L'invention propose donc également un second mode de réalisation, demeurant conforme à la normalisation actuelle du protocole SIP et ne nécessitant pas de modifier les terminaux déployés.

Pour ce faire, le système de communication S est apte à inclure les marqueurs dans des emplacements dépendant de sa fonction. Autrement dit, l'emplacement dans lequel les marqueurs sont inclus est différent pour un système de communication ayant une fonction de *« proxy* », ou de terminal client ou serveur. On rappelle qu'un même système de communication peut avoir plusieurs fonctions, et donc s'adapter à la fonction qu'il prend pour une session donnée.

Ainsi, dans le cas d'un client UAC, le marqueur est inclus dans l'entête « From » des messages de signalisation sortants. Plus précisément, il peut être inclus comme paramètre au sein de cet entête.

Dans le cas d'un serveur UAS, le marqueur est inclus dans l'entête « To » des messages de signalisation sortants. Il peut également être plus précisément inclus comme paramètre au sein de cet entête

Dans l'un et l'autre cas, ce paramètre peut être le paramètre « tag ».

Il peut toutefois ne pas être inclus dans le cas de messages de signalisation sortants ne nécessitant pas de réponse de la part de l'autre partie (i.e. le client UAC), c'est-à-dire des messages « 100 Trying » et des messages d'erreurs.

Par conséquent, un terminal de communication comportant un système de communication selon l'invention peut inclure le marqueur dans le champ « From » lorsqu'il a un rôle de client, et dans le champ « To » lorsqu'il a un rôle de serveur.

Dans le cas d'un élément intermédiaire de signalisation SIP, ou « proxy », les entêtes « From » et « To » ne peuvent généralement pas être modifiés.

Le marqueur est alors inclus dans le paramètre « branch » du dernier (chronologiquement) entête « Via » de chaque message de signalisation sortant.

Un entête « Via » est utilisé par les éléments terminaux SIP pour reacheminer les réponses par les mêmes noeuds que les requêtes du chemin aller.

Dans certains cas, en outre, certains éléments intermédiaires de signalisation, « proxy » modifient les entêtes « Record Route » et l'acheminement d'un message de réponse dans le réseau de communication se base sur ces entêtes « Record Route ». Dans ces cas-là, le marqueur est également inclus dans un paramètre de l'entête « Record route » de chaque message de signalisation sortant.

L'entête « Record-Route » est utilisé par les éléments terminaux SIP pour router les messages subséquents par les noeuds qui en ont fait la demande au chemin aller.

Dans le cas d'un élément de signalisation de type « B2BUA » (« back-*to-back User Agent* »), on peut adopter le comporte à la fois d'un serveur UAS (par exemple vis à vis de l'appelant) et d'un client UAC (vis à vis du prochain élément dans la chaîne ; par exemple l'appelé). Aussi, en tant que serveur, l'élément de signalisation B2BUA peut insérer le marqueur dans l'entête « To », et en tant que client il peut l'insérer dans l'entête « From ».

Le marqueur étant le même dans les deux cas, le problème évoqué précédemment que deux sessions soient ouvertes au sein du même élément de signalisation « B2BUA » est donc résolu.

Le marqueur peut également être inclus dans l'entête « Service Route » par un élément intermédiaire de signalisation ayant le rôle d'un élément S-CSCF dans une architecture IMS. Cet entête « Service Route » est défini dans le RFC 3608 de l'IETF, intitulé « Session Initiation Protocol (SIP) Extension Header Field for Service Route Discovery During Registation » et publié en octobre 2003.

Cet entête « Service Route » est inclus dans les messages de réponse aux requêtes « Register » faites par les clients désirant se connecter au réseau IMS. Ainsi, les messages suivants (« Invite », « Publish »...) peuvent comporter ce marqueur de sorte que l'élément S-CSCF puisse identifier qu'ils appartiennent à une même session applicative et les acheminer vers le même serveur. Ce problème relatif aux éléments S-CSCF, présenté précédemment dans la partie introductive est ainsi résolu par l'insertion du marqueur.

De la même façon, les serveurs de présence peuvent inclure le marqueur dans l'entête « Entity Tags » des messages de réponse aux requêtes « Publish » des clients (terminaux). De la même façon que précédemment, cela permet aux clients d'utiliser le marqueur dans leurs messages suivants (autres messages « Publish » lors d'une nouvelle mise à jour du profil de l'utilisateur, par exemple). Ainsi, le serveur de présence peut déterminer que ces messages de signalisation appartiennent tous à un même contexte « applicatif » et les acheminer vers un même serveur au sein du système de communication S. Le problème posé par les serveurs de présence et évoqué dans la partie introductive est ainsi également résolu par l'utilisation du marqueur.

Dans tous ces cas, le marqueur peut être inséré dans l'entête par l'utilisation d'un séparateur (le « ; » selon la grammaire du protocole SIP) et introduit par un mot-clé spécifique (par exemple la chaîne « marker= »). Il peut également être inséré sans usage d'un mot-clé.

## Revendications

1. Système de communication (S) apte à échanger des messages de signalisation, notamment conformes au protocole SIP, avec un réseau de communication (N), comportant une pluralité de serveurs (S₁, S₂, S₃... Sₙ) pour traiter les messages de signalisation entrants (mₛ) et générer des messages de signalisations sortants et un équipement de répartition de charge (LB) pour acheminer un message de signalisation entrant vers un serveur particulier en fonction de règles de répartition de charge (R, R_{aff}) , **caractérisé en ce que** lesdits serveurs disposent des moyens pour inclure dans les messages de signalisation sortants un marqueur représentatif au moins de lui-même, et **en ce que** lesdites règles de répartition de charge dudit équipement de répartition de charge contiennent des règles (R) pour, lorsqu'un marqueur est inclus dans un message de signalisation entrant, acheminer ledit message de signalisation entrant vers le serveur correspondant audit marqueur.

2. Système de communication selon la revendication 1, dans lequel les marqueurs contiennent au moins une première partie représentative dudit système de communication et l'identifiant de façon univoque au sein dudit réseau de communication.

3. Système de communication selon la revendication 2, dans lequel les marqueurs contiennent en outre une seconde partie représentative desdits serveurs et les identifiant de façon univoque au sein dudit système de communication.

4. Système de communication selon la revendication précédente, dans lequel ladite deuxième partie est constituée d'un identifiant abstrait basé sur l'adresse physique d'un desdits serveurs, ledit équipement de répartition de charge possédant une table des serveurs (TS) mettant en correspondant ledit identifiant abstrait et ladite adresse physique.

5. Système de communication selon l'une des revendications 3 ou 4, dans lequel lesdits marqueurs contiennent en outre une troisième partie représentative du contexte associé aux messages de signalisation.

6. Système de communication selon l'une des revendications précédentes, dans lequel lesdits serveurs incluent les marqueurs dans un emplacement standardisé et unique des messages de signalisation.

7. Système de communication selon l'une des revendications 1 à 5, dans lequel lesdits serveurs incluent lesdits marqueurs dans un emplacement dépendant de la fonction dudit système de communication.

8. Système de communication (S) selon l'une des revendications précédentes dans lequel lesdites règles de répartition de charge dudit équipement de répartition de charge contiennent des règles (R_{aff}) pour, lorsque aucun marqueur n'est inclus dans un message de signalisation entrant, affecter un serveur audit message de signalisation entrant.

9. Élément intermédiaire de signalisation comportant un système de communication selon l'une des revendications précédentes.

10. Élément intermédiaire de signalisation selon la revendication précédente, dans lequel lesdits marqueurs sont inclus dans les entêtes « Via » et/ou « Record route ».

11. Élément de signalisation de type B2BUA comportant un système de communication selon l'une des revendications 1 à 8, dans lequel lesdits marqueurs sont inclus à la fois dans l'entête « From » et dans l'entête « To » avec une valeur identique.

12. Terminal de communication comportant un système de communication selon l'une des revendications 1 à 8.

13. Terminal de communication selon la revendication précédente dans lequel lesdits marqueurs sont inclus dans le champ « From » lorsque ledit terminal a un rôle de client, et dans le champ « To » lorsqu'il a un rôle de serveur.

14. Réseau de communication comportant au moins un élément de signalisation selon l'une des revendications 9 à 1 et des moyens permettant de transmettre des messages de signalisation entre des terminaux de communication et ledit au moins un élément de signalisation.

15. Réseau de communication selon la revendication précédente dans lequel certains au moins desdits terminaux de communication sont conformes à l'une des revendications 12 ou 13.

16. Procédé de transmission de messages de signalisation entre un terminal de communication appelant et un terminal de communication serveur, mettant en oeuvre un élément de signalisation selon l'une des revendications 9 à 11.
